# EUROPEAN PATENT APPLICATION

(11) **EP 1 773 082 A1**
(43) Date of publication of application: **11.04.2007**
(21) Application number: 05109222.9
(22) Date of filing: 05.10.2005
(51) Int. Cl.: H04Q 7/34

(54) **Remote testing of mobile terminals**

(71) Applicant: Sysopen Digia Oyj, 00380 Helsinki (FI)
(72) Inventor: Pora, Heikki, 00980, HELSINKI (FI); Tulonen, Kai, 02940, ESPOO (FI); Kölbl, Wolfgang, 01230, VANTAA (FI)
(74) Representative: Pykälä, Timo Tapani

(57) **Abstract**

Remote testing of mobile terminals is presented. A remote testing server (106) includes: a local data transmission connection module (210) to couple the remote testing server (106) with a pool of mobile terminals (108, 110); a remote data transmission connection module (200) to couple the remote testing server (106) with remote testing clients (100, 102); a management module (202) to manage a use of the mobile terminals (108, 110) by the remote testing clients (100, 102); and an interactive interface module (204) to convey information between a remote testing client (100, 102) and a mobile terminal (108, 110) during a testing session.

## Description

### Field

The invention relates to a remote testing server for mobile terminal testing, an arrangement for remote testing of mobile terminals, a computer program product for remote testing of mobile terminals, and a method for remote testing of mobile terminals.

### Background

When new mobile terminals are being developed, they need to be tested and verified by various parties before they can be released for sale. Subcontractors usually carry out testing and verification processes. The subcontractors may be far away from the mobile terminal manufacturer, in a different country or even on a different continent.

Distribution of the test mobile terminals has several problems relating to shipping costs and time, version control of mobile terminal software, security risks, mobile network related problems, and accessory logistics.

The mobile terminals are usually shipped to the subcontractors by mail or courier. This process may be time consuming, especially if the receiving contractor is not located in the same economic area (European Union, for example), and customs and other import restrictions apply. Furthermore, the shipping costs themselves have to be taken into account since the mobile terminals are usually shipped back and forth for a few times before all the tests and verification are complete.

Before the mobile terminals can be tested, they need to be set up with correct versions of software. During the development of a new mobile terminal, the software is frequently updated, and the version may change even on a weekly basis. With shipping time and other delays, a tester is usually evaluating a version that is quite outdated. This may cause further delay in the product development. Furthermore, if the tester needs to evaluate add-on applications, those applications need to be installed separately for each mobile terminal, adding to the overall time used for mobile terminal testing.

When the mobile terminal is shipped to a subcontractor, there is a risk that the mobile terminal is lost or stolen during transport. This is problematic because prototypes are usually manufactured in small quantities and are quite expensive. Furthermore, if the mobile terminal has not yet been made public, the mobile terminal manufacturer does not wish to reveal the industrial design of the mobile terminal, because this might be an advantage to competitors.

If the mobile terminal manufacturer wishes to test the new mobile terminal in various networks around the world, the mobile terminal has to be physically in the country where it needs to be tested. In addition to the mobile terminal, a technical team related to testing also needs to be at the same location. This may cause significant costs, since a whole team of technicians has to travel to each country. Furthermore, if a developer wishes to test their application in various countries, they need to physically visit that country in order to perform the tests.

Modern mobile terminals are equipped with quite a large number of different accessories, for example memory cards, GPS (Global Positioning System) devices, etc. While those accessories are still being developed, they need to be tested already, in order to reduce time-to-market. The same logistics problems as with mobile terminals also apply to the accessories.

### Brief description of the invention

The present invention seeks to provide an improved remote testing server for mobile terminal testing, an improved arrangement for remote testing of mobile terminals, an improved computer program product for remote testing of mobile terminals, and an improved method for remote testing of mobile terminals.

According to an aspect of the invention, there is provided a remote testing server for mobile terminal testing, comprising: a local data transmission connection module to couple the remote testing server with a pool of mobile terminals; a remote data transmission connection module to couple the remote testing server with remote testing clients; a management module to manage a use of the mobile terminals by the remote testing clients; and an interactive interface module to convey information between a remote testing client and a mobile terminal during a testing session.

According to another aspect of the invention, there is provided an arrangement for remote testing of mobile terminals, comprising: means for coupling the arrangement with a pool of mobile terminals; means for coupling the arrangement with remote testing clients; means for managing a use of the mobile terminals by the remote testing clients; and means for interactively conveying information between a remote testing client and a mobile terminal during a testing session.

According to another aspect of the invention, there is provided a computer program product for remote testing of mobile terminals, comprising: a local data transmission connection module to couple the remote testing server with a pool of mobile terminals; a remote data transmission connection module to couple the remote testing server with remote testing clients; a management module to manage a use of the mobile terminals by the remote testing clients; and an interactive interface module to convey information between a remote testing client and a mobile terminal during a testing session.

According to another aspect of the invention, there is provided a method for remote testing of mobile terminals, comprising: coupling a remote testing server with a pool of mobile terminals; coupling the remote testing server with remote testing clients; managing a use of the mobile terminals by the remote testing clients; and conveying information interactively between a remote testing client and a mobile terminal during a testing session.

The invention provides several advantages. It increases efficiency and productivity of logistics related to distribution of mobile terminals for testing and verification purposes by using a clustered device management system. The foregoing problems are at least partly alleviated with the invention and its optional features.

### List of drawings

In the following, embodiments of the invention will be described, by way of example only, and with reference to the accompanying drawings, in which
Figure 1 illustrates a testing environment;
Figure 2 illustrates a remote testing server;
Figures 3, 4, 5, 6 and 7 illustrate a use of the remote testing server; and
Figure 8 illustrates a method for remote testing of mobile terminals.

### Description of embodiments

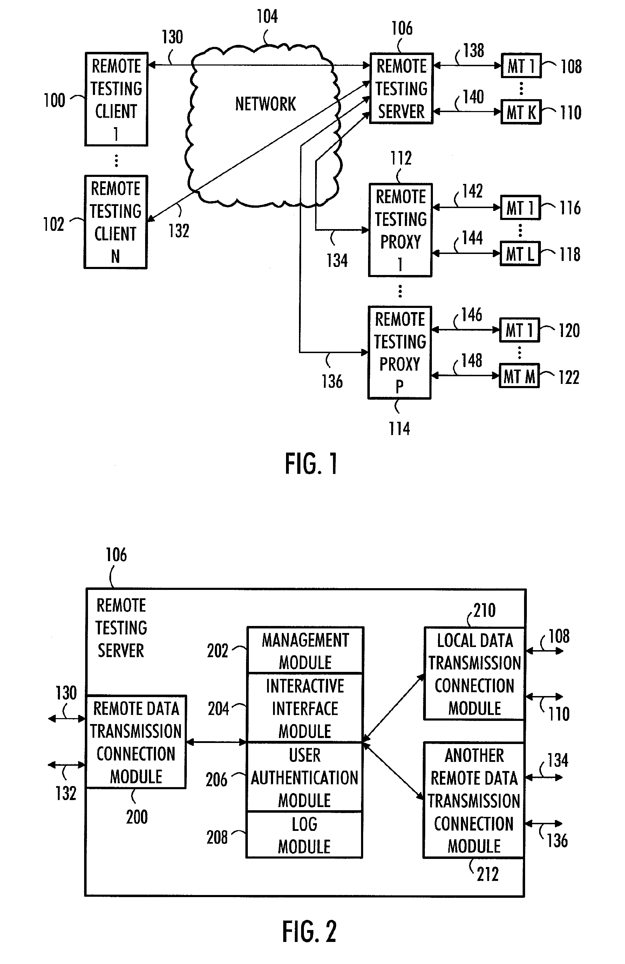

With reference to Figures 1 and 2, examine examples of remote testing server and testing environment. In the writing of this document, Digia® Remote Phone Management (RPM) is a tool for implementing at least partially the remote testing server and the testing environment.

A remote testing server 106 is located at one site. Remote testing clients 100, 102 are located at other sites. The remote testing clients 100, 102 may be coupled 130, 132 with the remote testing server 106. It is also possible that testing clients reside at the site of the remote testing server 106 as well. In RPM, the remote testing client 100, 102 includes a standard personal computer with a standard web-browser (Firefox, Mozilla, Opera or Internet Explorer, for example), a Java plug-in, and a Java applet implementing the user's view, i.e. control of a mobile terminal.

The users of remote testing clients 100, 102 may connect to the remote testing server 106 via a network 104. The network 104 may be a TCP/IP (Transmission Control Protocol / Internet Protocol) network, such as the Internet, a private network or a virtual private network, for example.

Once the user connects to the remote testing server 106, he or she may view a list of mobile terminals 108, 110 that he or she is authorized to use. It is possible to limit access to certain mobile terminals 108, 110 of certain users. The user may select a mobile terminal 108, 110 he or she would like to use, and after the selection is made, the user may fully control the mobile terminal 108, 110. Depending on the service requested, the user may see the screen of the mobile terminal 108, 110 on his computer or carry out other operations with the mobile terminal 108, 110, for example.

The remote testing server 106 may be coupled 138, 140 with mobile terminals 108, 110. The mobile terminal 108, 110 refers to a mobile communication device operating with or without a subscriber identification module (SIM), including, but not limited to, the following types of devices: mobile phone, Smartphone, personal digital assistant (PDA), handset. A client application may be installed in each mobile terminal 108, 110 to be coupled with the remote testing server 106. Each pool of mobile terminals 108, 110 includes a certain amount of mobile terminals 108, 110. The mobile terminals 108, 110 may be coupled 138, 140 with the remote testing server 106 by local connectivity methods, such as USB (Universal Serial Bus), Bluetooth, WLAN (Wireless Local Area Network). Besides local connectivity methods, other prior art connectivity methods may be employed, such as packet transmission of GPRS (General Packet Radio Service) and UMTS (Universal Mobile Telecommunications System). The number of mobile terminals 108, 110 is not limited. In RPM, the mobile terminal 108, 110 may be a Symbian OS based Smartphone (based on Symbian OS 6.1 or later, for example); the client application may thus be run on a Series 60, Series 80, Series 90 or UIQ mobile terminal, for example.

With the remote testing server 106, the mobile terminals 108, 110 are hosted in different clusters, or pools, that may be located in different parts of the world. The mobile terminals 108, 110 in a cluster may be connected to different mobile networks, such as cellular radio networks, and different software versions may be installed in the mobile terminals 108, 110.

Shipping of the mobile terminals 108, 110 is no longer necessary; subcontractors connect to the mobile terminals 108, 110 via the centralized remote testing server 106. The remote testing server 106 may be located in a public or closed network. Since security is very important, access control may be implemented in the remote testing server 106, specifying who is allowed to use which mobile terminal 108, 110 at a certain time.

When the users access the mobile terminals 108, 110 via the remote testing server 106, they may remotely control the mobile terminal 108, 110 using commands sent from their local computer, the remote testing client 100, 102, by using input methods available on that computer, keyboard and mouse, for example. In addition, the display of the mobile terminal 108, 110 may be shown on the local computer of the user, giving the user information on the status of the mobile terminal 108, 110.

Security is increased since the mobile terminals 108, 110 are physically in secure premises, and do not need to be transported to other locations. Further, the subcontractors have no physical access to the mobile terminals 108, 110, meaning that the industrial designs of the mobile terminals 108, 110 remain unrevealed.

The remote testing server 106 forms part of a solution for providing remote access to multiple mobile terminals 108, 110 over IP (Internet Protocol) based networks. The solution provides a reliable and secure communication channel between the mobile terminal 108, 110 and the remote testing client 100, 102 as well as a framework for implementing services. Services may utilise all the features available on the mobile terminal 108, 110 and communicate with the remote testing client 100, 102. Multiple services may be used at the same time.

The described solution is a multi-user, multi-mobile terminal solution, meaning that multiple users and mobile terminals 108, 110 may be connected to the remote testing server 106 at the same time, and that different devices may be used simultaneously. The remote testing server 106 takes care of multiplexing, and makes sure that the correct information is transmitted from the user to mobile terminal 108, 110 and vice versa.

In an embodiment, the remote testing server 106 may also be used for providing consumers with access to mobile terminals 108, 110 located in the clusters. In such a case, the consumer may use the mobile terminal 108, 110 remotely by connecting to the remote testing server 106 and selecting a mobile terminal he or she wishes to use.

The remote testing server 106 for mobile terminal testing may be a server computer or a standard personal computer. In RPM, the remote testing server 106 includes a web server with a Java support. The remote testing server 106 may include, in addition to normal hardware and software of a server computer, the following modules: a local data transmission connection module 210, a remote data transmission connection module 200, a management module 202, and an interactive interface module 204.

One embodiment of the remote testing server 106 is a computer program product for remote testing of mobile terminals. In such a case, the described functionality/structures may be implemented as software modules. The computer program product may be embodied on a distribution medium. The distribution medium may be any means for distributing software to customers, such as a (computer readable) program storage medium, a (computer readable) memory, a (computer readable) software distribution package, a (computer readable) signal, or a (computer readable) telecommunications signal.

In principle, the remote testing server 106 may be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the remote testing server 106, necessary processing capacity, production costs, and production volumes, for example.

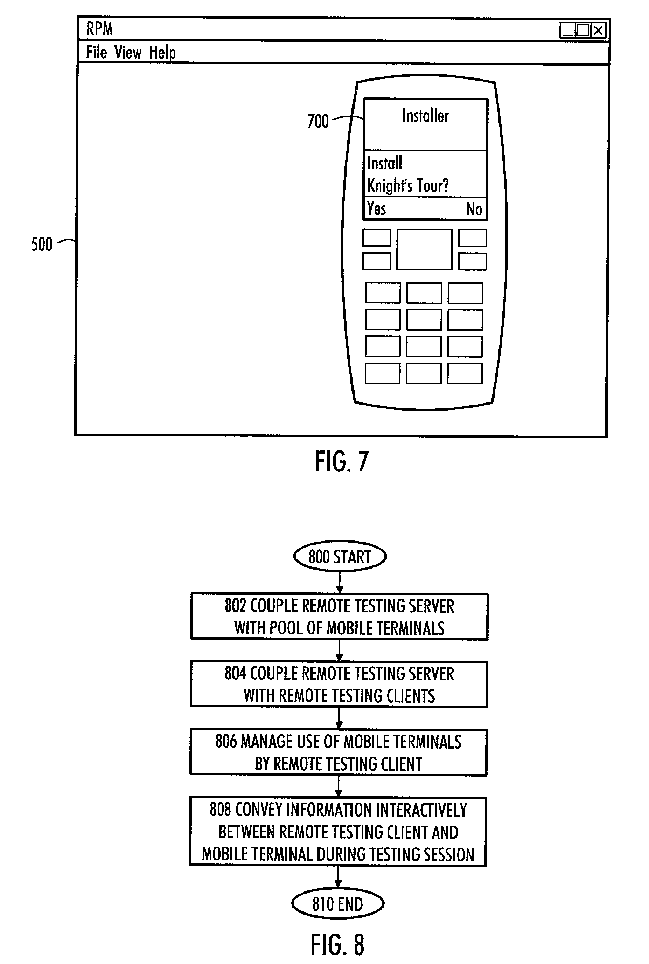

Another embodiment provides a method for remote testing of mobile terminals, as illustrated in Figure 8. The method starts in 800. In 802, a remote testing server is coupled with a pool of mobile terminals. In 804, the remote testing server is coupled with remote testing clients. Next, the use of the mobile terminals by the remote testing clients is managed in 806. In 808, information is conveyed interactively between a remote testing client and a mobile terminal during a testing session. The method ends in 810. Embodiments of the remote testing server 106 may be applied to the method as well.

The local data transmission connection module 210 is used to couple 138, 140 the remote testing server 106 with a pool of mobile terminals 108, 110. The remote data transmission connection module 200 is used to couple the remote testing server 106 with the remote testing clients 100, 102.

The management module 202 is used to manage the use of the mobile terminals 108, 110 by the remote testing clients 100, 102. In an embodiment, the management module 202 presents a list of mobile terminals 108, 110 available to the remote testing client 100, 102, and receives selections of the mobile terminals for the testing session.

The interactive interface module 204 is used to convey information between the remote testing client 100, 102 and the mobile terminal 108, 110 during a testing session. With the solution, the user may select the desired mobile terminal 108 and then use the mobile terminal 108 as if it were right next to him or her. The interactive interface module 204 may thus implement at least some of the following operations: convey screen information from the mobile terminal 108, 110 to the remote testing client 100, 102 during the testing session, convey user input information from the remote testing client 100, 102 to the mobile terminal 108, 110 during the testing session, transform user input information between a format of the remote testing client 100, 102 and a format of the mobile terminal 108, 110 during the testing session, convey user output information from the mobile terminal 108, 110 to the remote testing client 100, 102 during the testing session, convey setting information from the remote testing client 100, 102 to the mobile terminal 108, 110 during the testing session, convey files and/or applications between the mobile terminal 108, 110 and the remote testing client 100, 102 during the testing session, convey information needed during testing of an application installed in the mobile terminal 108, 110, convey information needed during testing of message transmission or reception with the mobile terminal 108, 110, and convey information needed during testing of an incoming call answer or outgoing call initiating with the mobile terminal 108, 110.

In an embodiment, the remote testing server 106 includes a user authentication module 206 to authenticate the user of the remote testing client 100, 102.

The remote testing server 106 may also include other prior art modules not described here, implementing firewall and NAT (Network Address Translation) functionalities, for example.

So far, the user view of the remote testing server 106 has been described. Naturally, an administrative view of the remote testing server 106 also exists. The user interface of the remote testing server 106 may be used for giving administrative commands to the system. Another alternative is that an administrative client (not illustrated) is coupled, through the network 104, with the remote testing server 106. In an embodiment, the remote testing server includes a log module 208 to create an access and usage log.

So far, it has been illustrated that the pool of mobile terminals 108, 110 is directly coupled 138, 140 with the remote testing server 106. In an embodiment, the remote testing server 106 includes another remote data transmission connection module 212 to couple 134, 136 the remote testing server 106 with a remote testing proxy 112, 114. Each remote testing proxy 112, 114 may be coupled 142, 144, 146, 148 to another pool of mobile terminals 116, 118, 120, 122. This embodiment enables distribution of mobile terminal pools to a number of different geographic sites. The mobile terminals 116, 118, 120, 122 at remote sites are coupled 134, 136 with the remote testing server 106 through the remote testing proxy 112, 114. The remote testing proxy 112, 114 may be connected to the remote server 106 via the network 104 (usually using an encrypted connection such as Secure Socket Layer / Virtual Private Network, SSL/VPN), while the mobile terminals 116, 118, 120, 122 may be connected to the remote testing proxy 112, 114 using the connectivity methods mentioned elsewhere in this document. The remote testing proxies 112, 114 may be added to and removed from the remote testing server 106. The number of remote testing proxies 112, 114 connected to the remote testing server 106 is not limited either.

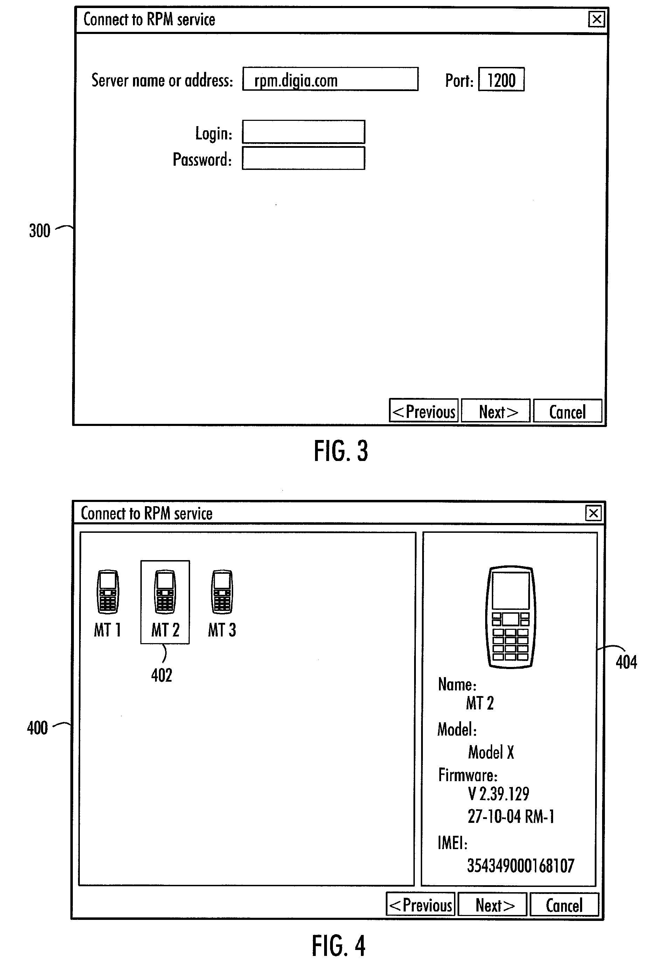

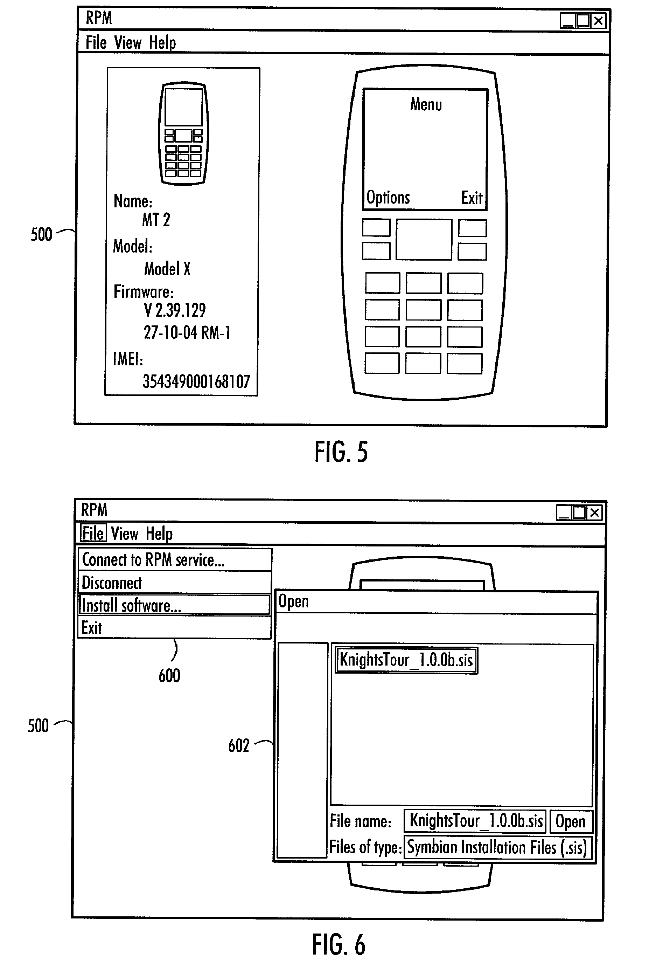

With reference to Figures 3, 4, 5, 6 and 7, an example on the use of the remote testing server 106 is described. A software company has developed a new Symbian application and they wish to test their application on an upcoming Symbian phone. The phone has not been released yet, but the phone manufacturer has granted the software company access to their latest prototypes using RPM. A software engineer of the software company proceeds as follows in order to test their application:

The software engineer opens a developer forum web page on his web-browser. He or she sees a display 300 in his or her remote testing client 100. After logging in he or she selects a link for remote testing.

A list of phones available for testing is presented in a display 400. The software engineer then chooses the phone 402 he or she wants to use his application on. The internal software version installed in the phone is also shown on part 404 of the display, as well as other phone related details, IMEI (International Mobile Equipment Identity) for example.

A new window 500 opens up on the desktop of the remote testing client 100. This window contains the phone's screen and allows the software engineer to interact with the phone as if it were right next to him. Using the PC keyboard and mouse, the software engineer can control the phone 108 as per normal.

From a separate menu item 600, 602, the software engineer may select to upload his application to the phone 108. The application is then installed in the phone 108 and can be used in a normal way, as illustrated on the virtual screen 700 of the phone 108.

After the software engineer has completed testing the application, he or she can transfer log files and other information from the phone 108 to the desktop of his remote testing client 100 and analyse the information.

Even though the invention has been described above with reference to an example according to the accompanying drawings, it is clear that the invention is not restricted thereto but it can be modified in several ways within the scope of the appended claims.

## Claims

1. A remote testing server (106) for mobile terminal testing, comprising:
a local data transmission connection module (210) to couple the remote testing server (106) with a pool of mobile terminals (108, 110);
a remote data transmission connection module (200) to couple the remote testing server (106) with remote testing clients (100, 102);
a management module (202) to manage a use of the mobile terminals (108, 110) by the remote testing clients (100, 102); and
an interactive interface module (204) to convey information between a remote testing client (100, 102) and a mobile terminal (108, 110) during a testing session.

2. The remote testing server of claim 1, wherein the interactive interface module (204) further conveys screen information from the mobile terminal (108, 110) to the remote testing client (100, 102) during the testing session.

3. The remote testing server of claim 1 or 2, wherein the interactive interface module (204) further conveys user input information from the remote testing client (100, 102) to the mobile terminal (108, 110) during the testing session.

4. The remote testing server of claim 3, wherein the interactive interface module (204) further transforms user input information between a format of the remote testing client (100, 102) and a format of the mobile terminal (108, 110) during the testing session.

5. The remote testing server of any one of the preceding claims, wherein the interactive interface module (204) further conveys user output information from the mobile terminal (108, 110) to the remote testing client (100, 102) during the testing session.

6. The remote testing server of any one of the preceding claims, wherein the interactive interface module (204) further conveys setting information from the remote testing client (100, 102) to the mobile terminal (108, 110) during the testing session.

7. The remote testing server of any one of the preceding claims, wherein the interactive interface module (204) further conveys files and/or applications between the mobile terminal (108, 110) and the remote testing client (100, 102) during the testing session.

8. The remote testing server of any one of the preceding claims, wherein the interactive interface module (204) further conveys information needed during testing of an application installed in the mobile terminal (108, 110).

9. The remote testing server of any one of the preceding claims, wherein the interactive interface module (204) further conveys information needed during testing of message transmission or reception with the mobile terminal (108, 110).

10. The remote testing server of any one of the preceding claims, wherein the interactive interface module (204) further conveys information needed during testing of an incoming call answer or outgoing call initiating with the mobile terminal (108, 110).

11. The remote testing server of any one of the preceding claims, wherein the management module (202) further presents a list of mobile terminals (108, 110) available to the remote testing client (100, 102) and receives selections of the mobile terminals for the testing session.

12. The remote testing server of any one of the preceding claims, further comprising a user authentication module (206) to authenticate the user of the remote testing client (100, 102).

13. The remote testing server of any one of the preceding claims, further comprising a log module (208) to create an access and usage log.

14. The remote testing server of any one of the preceding claims, further comprising another remote data transmission connection module (212) to couple the remote testing server (106) with a remote testing proxy (112, 114) coupled to another pool of mobile terminals (116, 118, 120, 122).

15. An arrangement for remote testing of mobile terminals, comprising:
means for coupling the arrangement with a pool of mobile terminals;
means for coupling the arrangement with remote testing clients;
means for managing a use of the mobile terminals by the remote testing clients; and
means for interactively conveying information between a remote testing client and a mobile terminal during a testing session.

16. A computer program product for remote testing of mobile terminals, comprising:
a local data transmission connection module to couple the remote testing server with a pool of mobile terminals;
a remote data transmission connection module to couple the remote testing server with remote testing clients;
a management module to manage a use of the mobile terminals by the remote testing clients; and
an interactive interface module to convey information between a remote testing client and a mobile terminal during a testing session.

17. A method for remote testing of mobile terminals, comprising:
coupling (802) a remote testing server with a pool of mobile terminals;
coupling (804) the remote testing server with remote testing clients;
managing (806) a use of the mobile terminals by the remote testing clients; and
conveying (808) information interactively between a remote testing client and a mobile terminal during a testing session.

## Amended claims

### Amended claims in accordance with Rule 86(2) EPC.

**1.** A remote testing server (106) for mobile terminal testing, comprising:
a remote data transmission connection module (200) to couple the remote testing server (106) with remote testing clients (100, 102);
a management module (202) to manage a use of the mobile terminals (108, 110) by the remote testing clients (100, 102); and
an interactive interface module (204) to convey information between a remote testing client (100, 102) and a mobile terminal (108, 110) during a testing session;
**characterized in that**
the remote testing server (106) further comprises a local data transmission connection module (210) to couple the remote testing server (106) with a pool of mobile terminals (108, 110);
the interactive interface module (204) further conveys setting information from the remote testing client (100, 102) to the mobile terminal (108, 110) during the testing session; and/or
the interactive interface module (204) further conveys applications between the mobile terminal (108, 110) and the remote testing client (100, 102) during the testing session.

**2.** The remote testing server of claim 1, wherein the interactive interface module (204) further conveys screen information from the mobile terminal (108, 110) to the remote testing client (100, 102) during the testing session.

**3.** The remote testing server of claim 1 or 2, wherein the interactive interface module (204) further conveys user input information from the remote testing client (100, 102) to the mobile terminal (108, 110) during the testing session.

**4.** The remote testing server of claim 3, wherein the interactive interface module (204) further transforms user input information between a format of the remote testing client (100, 102) and a format of the mobile terminal (108, 110) during the testing session.

**5.** The remote testing server of any one of the preceding claims, wherein the interactive interface module (204) further conveys user output information from the mobile terminal (108, 110) to the remote testing client (100, 102) during the testing session.

**6.** The remote testing server of any one of the preceding claims, wherein the interactive interface module (204) further conveys information needed during testing of an application installed in the mobile terminal (108, 110).

**7.** The remote testing server of any one of the preceding claims, wherein the interactive interface module (204) further conveys information needed during testing of message transmission or reception with the mobile terminal (108, 110).

**8.** The remote testing server of any one of the preceding claims, wherein the interactive interface module (204) further conveys information needed during testing of an incoming call answer or outgoing call initiating with the mobile terminal (108, 110).

**9.** The remote testing server of any one of the preceding claims, wherein the management module (202) further presents a list of mobile terminals (108, 110) available to the remote testing client (100, 102) and receives selections of the mobile terminals for the testing session.

**10.** The remote testing server of any one of the preceding claims, further comprising a user authentication module (206) to authenticate the user of the remote testing client (100, 102).

**11.** The remote testing server of any one of the preceding claims, further comprising a log module (208) to create an access and usage log.

**12.** The remote testing server of any one of the preceding claims, further comprising another remote data transmission connection module (212) to couple the remote testing server (106) with a remote testing proxy (112, 114) coupled to another pool of mobile terminals (116, 118, 120, 122).

**13.** A computer program product for remote testing of mobile terminals, comprising software modules, which, when loaded into a computer, constitute the modules of any one of the preceding claims.

**14.** A method for remote testing of mobile terminals, comprising:
coupling (804) the remote testing server with remote testing clients;
managing (806) a use of the mobile terminals by the remote testing clients; and
conveying (808) information interactively between a remote testing client and a mobile terminal during a testing session
**characterized in that** the method further comprises:
coupling (802) a remote testing server with a pool of mobile terminals;
conveying (808) setting information from the remote testing client to the mobile terminal during the testing session; and/or
conveying (808) applications between the mobile terminal (108, 110) and the remote testing client during the testing session.
